# EUROPÄISCHE PATENTANMELDUNG

(11) **EP 1 508 475 A2**
(43) Veröffentlichungstag der Anmeldung: **23.02.2005**
(21) Anmeldenummer: 04019607.3
(22) Anmeldetag: 18.08.2004
(51) Int. Cl.: B60Q 1/48, B60R 1/00, B60R 11/04, B60Q 1/44

(54) **Bremsleuchte mit Kamera**

(30) Priorität: 22.08.2003 DE 20313003 U; 17.12.2003 DE 20319579 U
(71) Anmelder: MEKRA Lang GmbH & Co. KG, 90765 Fürth (DE)
(72) Erfinder: Lang, Heinrich, 91465 Ergersheim (DE); Fleischer, Peter, 90453 Nürnberg (DE)
(74) Vertreter: Winter, Brandl, Fürniss, Hübner, Röss, Kaiser, Polte Partnerschaft

(57) **Zusammenfassung**

Es wird eine eine Leuchte, insbesondere eine Bremsleuchte, mit integrierter Kamera zur Anwendung in Kraftfahrzeugen und Nutzfahrzeugen angegeben, bei der das Aufleuchten der Leuchte die Bildqualität der Kamera nicht beeinträchtigt. Durch das Vorsehen eines Abschirmmittels wird verhindert, dass Licht von dem Leuchtelement in die Kamera einfällt und die Bildqualität beeinträchtigt.

## Beschreibung

Die vorliegende Erfindung betrifft eine Leuchte, insbesondere eine Bremsleuchte, mit integrierter Kamera zur Anwendung in Kraftfahrzeugen und insbesondere Nutzfahrzeugen.

Aus dem Stand der Technik sind Kameraeinrichtungen z.B. als Rangierhilfen bekannt, die dazu geeignet sind, den Bereich um das Fahrzeug zu überwachen, den der Fahrer nicht unmittelbar selber einsehen kann. Die Offenlegungsschrift DE 198 16 054 A1 beschreibt ein Kamerasystem zum Überwachen einer nicht unmittelbar einsehbaren Umgebung eines Fahrzeugs. Die zur Überwachung der Umgebung notwendigen Kameras werden an der Rückseite des Fahrzeugs sowie auch auf Höhe der Außenspiegel montiert, um sogenannte tote Winkel eines Fahrzeugs zu überwachen.

Kommerziell erhältliche Kamerasysteme verwenden allerdings Kameras, die zusätzlich zu den von außen sichtbaren Elementen, wie etwa Rückleuchte, Bremsleuchte, dritte Rückleuchte, in dem Fahrzeug angeordnet sind. Die Kamera als weiteres Element, das in dem Fahrzeug untergebracht werden muss, bereitet insbesondere bei dem Design der Karosserie eines Fahrzeugs als auch bei der Konstruktion einen Mehraufwand, da der Fahrzeughersteller beim Packaging, d.h. der Integration der Einzelteile zu einem Gesamtfahrzeug ein weiteres Bauteil und somit dessen Unterbringung im Gesamtfahrzeug berücksichtigen muss.

Ferner müssen Kameras, die zusätzlich an der Karosserie befestigt werden, bei der Auslegung der Aerodynamik eines Fahrzeugs mitberücksichtigt werden und durch entsprechende Gehäuse vor Beschädigungen geschützt werden.

Diesen Nachteil der zusätzlichen Montage vermeidet der Stand der Technik nach DE 100 10 434 A1 aus der eine Bremsleuchte mit integrierter Kamera bekannt ist. Allerdings kann durch die unmittelbar benachbarte Anordnung von Kamera und Bremslicht die Bildqualität des von der Kamera erzielten Bildes durch das Aufleuchten des Bremslichtes beeinträchtigt werden.

Aus DE 39 00 667 A1 ist eine periskopartige Kameravorrichtung für Kfz bekannt. Die aus dem Dach des Kfz ausfahrbare Vorrichtung umfaßt in einem gemeinsamen Gehäuse eine Kamera mit einer bestimmten Blickrichtung und eine Bremsleuchte in die entgegengesetzte Richtung.

Aus DE 198 16 054 A1 ist ein Kamerasystem zum Überwachen einer nicht unmittelbar einsehbaren Umgebung eines Fahrzeugs bekannt. Das System umfaßt mehrere um das Fahrzeug herum angebrachte Kameras, unter anderem im Heckbereich. Eine dieser Kameras kann in eine Bremsleuchte integriert sein. Damit kann auch in diesem Fall die aufleuchtende Bremsleuchte das von der Kamera aufgenommene Bild überbelichten.

Ausgehend von dem nächst kommenden Stand der Technik gemäß der DE 100 10 434 A1 ist es Aufgabe der Erfindung eine Leuchte mit integrierter Kamera zu schaffen, bei der das Aufleuchten der Leuchte die Bildqualität der Kamera nicht beeinträchtigt.

Die Lösung dieser Aufgabe erfolgt durch die Merkmale des Anspruchs 1.

Durch das Vorsehen eines Abschirmmittels wird verhindert, dass Licht von dem Leuchtelement in die Kamera einfällt und die Bildqualität beeinträchtigt.

Dieses Abschirmmittel kann passiv durch die Anordnung der Kamera im Verhältnis zum Leuchtelement (Ansprüche 2 bis 4) und/oder aktiv durch eine die Kamera umgebende Manschette (Anspruch 5) erreicht werden.

Wird aber die Kamera z.B. im Verhältnis zum Leuchtelement nach vorne versetzt, ist es nicht möglich dass Lichtstrahlen des Leuchtelements auf die Kamera auftreffen und somit das erzielte Bild verschlechtern (Anspruch 3). Das selbe trifft zu, wenn sich die Hauptstrahlrichtung des Lichtes des Leuchtelements von der Ausrichtung der Kamera unterscheidet, d.h. wenn ein Winkel größer als 0° und vorzugsweise 10° und 90° zwischen der Hauptstrahlrichtung des Leuchtelementes und der Ausrichtung der Kamera ausgebildet ist (Anspruch 4). Auch in diesem Fall kann die Anordnung der Kamera verhindern, dass Lichtstrahlen des Leuchtelements auf die Kamera einfällt.

Gemäß einer weiteren Ausgestaltung der Erfindung weist die Leuchte eine Abschirmung in Form einer Manschette auf, um die Kamera vor dem einfallenden Licht des Leuchtelements abzuschirmen. Diese Manschette kann dabei an dem Leuchtelement und/oder um die Kamera vorgesehen sein (Anspruch 5).

Diese verschiedenen Maßnahmen lassen sich auch in Kombination anwenden.

Gemäß einer weiteren vorteilhaften Ausgestaltung der Erfindung ist die Kamera um wenigstens eine Achse schwenkbar und/oder verschiebbar gestaltet (Anspruch 6), was es ermöglicht, dass verschiedene Bereiche außerhalb des Fahrzeugs, z.B. abhängig von den Wünschen des Fahrers, betrachtet werden können. Dadurch ist es auch möglich, dass mehrere Kameras durch eine einzige schwenkbare Kamera ersetzt werden, sofern die Kamera in einer entsprechenden Position angeordnet ist.

Gemäß einer weiteren Ausgestaltung der vorliegenden Erfindung wird die Kamera so gelagert, dass sie mit mindestens zwei Freiheitsgraden verstellbar ist. Genauer gesagt wird die Kamera mittels einer Kugelgelenkhalterung schwenkbar gelagert, so dass die Kamera mit wenigstens zwei Freiheitsgraden schwenkbar gelagert ist und ein größerer Bereich als bei einer Kamera, die nur um eine Achse schwenkbar gelagert ist, von der Kamera eingesehen werden kann (Anspruch 7) .

Gemäß einer bevorzugten Ausgestaltung der vorliegenden Erfindung ist die Kamera unter oder neben dem Leuchtelement angeordnet (Anspruch 8). Diese Ausgestaltung ist vorteilhaft, wenn die erfindungsgemäße Leuchte z.B. als Rangierhilfe für Lastkraftwagen, Wohnmobile o.ä. verwendet wird. Bei diesen Fahrzeugen ist es anzustreben die Kamera an einer Stelle möglichst weit oben anzubringen, um einen größtmöglichen Bereich mit der Kamera erfassen zu können. Vorteilhaft ist es die Leuchte mit Kamera an einem Kastenaufbau oben und insbesondere mittig anzubringen. Da die Kamera z.B. unterhalb des Leuchtelements angeordnet ist und z.B. bei der Anwendung als Rangierhilfe von Lastkraftwagen zusätzlich ohnehin nach unten ausgerichtet ist, wird die erzielte Bildqualität nicht durch das Aufleuchten des Leuchtelements beeinträchtigt. Darüber hinaus ist eine Verwendung der Erfindung gemäß dieser Ausführungsform für die in manchen Ländern gesetzlich vorgeschriebene dritte Bremsleuchte vorteilhaft. Vorteilhaft ist bei dieser Ausgestaltung ferner, dass das Leuchtelement, wie z.B. das flächige Leuchtelement bei Rückleuchten, nicht durch die Kamera unterbrochen wird, so dass nach außen eine geschlossene Leuchtfläche bestehen bleibt und die eingebaute Kamera bei Aufleuchten der Rückleuchte einem Betrachter nicht auffällt.

Gemäß einer weiteren vorteilhaften Ausgestaltung der vorliegenden Erfindung ist die Kamera von dem Leuchtelement umgeben (Anspruch 9). Die Anordnung der Kamera mittig in einem Leuchtfeld bestehend aus mehreren Leuchtelementen ermöglicht größtmögliche Freiheiten beim Design der Leuchte. Diese Ausgestaltung kommt insbesondere zum Tragen, wenn es sich bei dem Leuchtelement um eine LED bzw. Leuchtdiode anstatt der im Fahrzeugbau ansonsten üblichen Halogen-, Xenon- und Glühlampen handelt.

Eine weitere vorteilhafte Ausgestaltung der Erfindung besteht darin, die erfindungsgemäße Leuchte mit einer Kamera zu versehen, die eine konvex geformte Abdeckung aufweist (Anspruch 10). Die Abdeckung befindet sich vor der Linse der Kamera und ist vorzugsweise in einer weise konvex ausgebildet, dass sich der Mittelpunkt der konvexen Abdeckung über der Linsenmitte der Kamera befindet. Diese Ausgestaltung ist dahingehend vorteilhaft, dass eine Flüssigkeit, wie z.B. Regentropfen, bei einer nach unten gerichteten Kamera die längste Zeit um den Mittelpunkt der konvexen, flächigen Abdeckung zubringt, bevor die Flüssigkeit schwerkraftbedingt tropfenförmig von der Abdeckung abtropft. Aufgrund der konvexen Form hinterlässt die Flüssigkeit Kalk- und Schmutzrückstände lediglich um den Mittelpunkt der konvexen Abdeckung, d.h. dem tiefsten Punkt bei einer nach unten gerichteten Kamera. Die Kalkund Schmutzrückstände bilden lediglich einen kleinen Fleck, der insbesondere beim Einsatz von Kameras mit kleiner Brennweite nur eine vernachlässigbare Beeinträchtigung darstellt. Die Reinigungsintervalle für die Abdekkung können somit um ein Vielfaches vergrößert werden.

Ferner kann gemäß einer weiteren vorteilhaften Ausgestaltung auch das Gehäuse selbst eine Abdeckung darstellen oder eine Abdeckung aufweisen, die zumindest in einem Bereich konvex geformt ist, in dem die Kamera durch das Gehäuse Aufnahmen macht (Anspruch 11). Das heißt, das Gehäuse kann eine Abdeckung aufweisen, die vollständig konvex ausgebildet ist, kann aber auch eine konvexe Auswölbung in einem Teilbereich der Abdeckung aufweisen. Dadurch werden bei einer nach unten ausgerichteten Abdekkung, oder dem nach unten ausgerichteten Teilbereich der Abdeckung, die gleichen Vorteile erzielt wie bei der oben erläuterten Abdeckung direkt an der Kamera. Darüber hinaus ist diese Ausgestaltung vorteilhaft, da die speziell geformte Abdeckung an der Kamera weggelassen werden kann. Ferner kann die Kamera vollständig in dem Gehäuse integriert werden und es können trotzdem die vorteilhaften Eigenschaften einer konvex geformten Abdeckung erzielt werden.

Das Unterbringen der Kamera in den für Leuchten üblichen Gehäusen bedeutet für den Fahrzeughersteller, dass er keine Rücksicht auf ein zusätzliches Bauteil nehmen muss, das z.B. in der Karosserie des Fahrzeugs integriert werden muss. Vielmehr ist es möglich, dass bisher übliche Design- und Konstruktionsvorgänge beibehalten werden, und dass lediglich ein weiterer Anschluss auf der Innenseite der jeweiligen Leuchte mit Kamera, sowie auch entsprechende Kabelverbindungen im Inneren des Fahrzeugs berücksichtigt werden müssen. Darüber hinaus muss die Kamera bei der Auslegung der aerodynamischen Eigenschaften eines Fahrzeugs nicht mehr gesondert berücksichtigt werden und sie ist auch besser vor Beschädigungen geschützt als sie es an eher exponierten Stellen an der Karosserie wäre.

Weitere Einzelheiten, Merkmale und Vorteile der Erfindung ergeben sich aus der nachfolgenden Beschreibung einer beispielhaften Ausführungsform der Erfindung anhand der Zeichnung.

Es zeigt
Fig. 1 eine beispielhafte einer Bremsleuchte mit Kamera in Aufsicht;
Fig. 2 die Bremsleuchte mit Kamera von Fig. 1 von unten;
Fig. 3 einen Schnitt durch die Bremsleuchte mit Kamera entlang der Linie A-A in Fig. 1; und
Fig. 4 das Bremslicht mit Kamera nach den Figuren 1 bis 3 mittig an der oberen Kante eines Nutzfahrzeuges mit kastenförmigen Aufbau montiert.

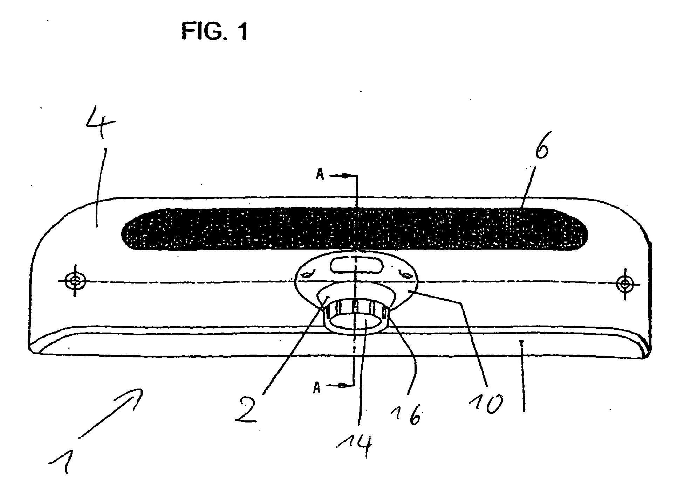

Die Figuren 1 bis 4 zeigen eine beispielhafte Ausführungsform der vorliegenden Erfindung anhand einer Bremsleuchte.

Fig. 1 bis 3 zeigen eine beispielhafte Ausführungsform einer Bremsleuchte 1 mit integrierter Kamera 2. Die Bremsleuchte 1 umfaßt ein gemeinsames Gehäuse 4 in das die Kamera 2 und ein streifenförmiges Leuchtelement 6 integriert ist. Bei Betätigung der Bremse leuchtet das Leuchtelement 6 auf und strahlt Licht in den rückwärtigen Halbraum aus, hauptsächlich in eine Hauptstrahlrichtung 8, die horizontal nach hinten verläuft.

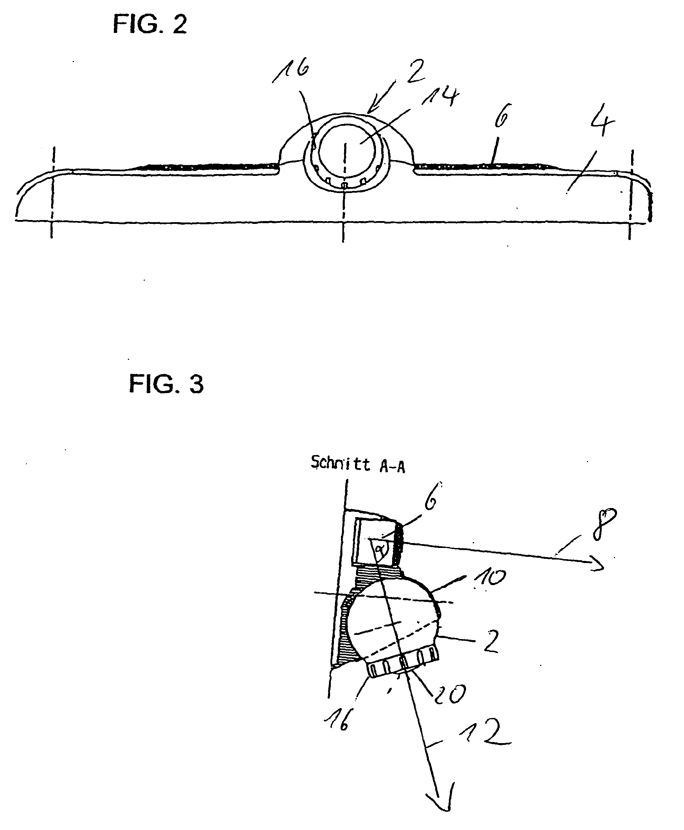

Die Kamera 2 ist unter dem streifenförmigen Leuchtelement 6 mittels einer Kugelgelenkhalterung 10 angeordnet. Durch die Kugelgelenkhalterung 10 kann die Aufnahmerichtung 12 der Kamera verändert werden. Hierdurch läßt sich die Aufnahmerichtung 12 der Kamera 2 auf die jeweiligen Bedürfnisse und Gegebenheiten, wie Montagehöhe der Bremsleuchte 1 etc., einstellen und zusätzlich läßt sich damit auch erreichen, dass die Hauptstrahlrichtung 8 des Leuchtelements 6 und die Aufnahmerichtung 12 der Kamera 2 einen Winkel im Bereich zwischen 10° und 90° einschließen. Wie aus Fig. 3 zu ersehen ist weist die Hauptstrahlrichtung 8 des Leuchtelements 6 zu der Aufnahmerichtung 12 der Kamera 2 in der beispielhaften Ausführungsform einen Winkel α von ca. 50° ein. Hierdurch wird sicher verhindert, dass Licht aus dem Leuchtelement 6 in die Kamera 2 einfallen kann.

Die Kamera 2 umfaßt ein Objektiv 14, das von einer Manschette 16 umgeben ist. Durch die Manschette 16 wird verhindert, dass Streulicht in die Kamera 2 einfällt.

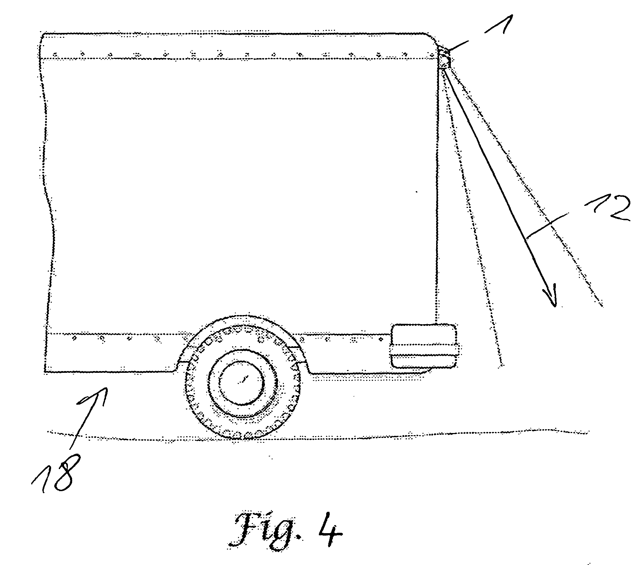

Die beispielhafte Ausführungsform der Erfindung dient als Bremsleuchte 1, die z.B. am Heck eines Lastkraftwagens 14 mit Kastenaufbau oben angebracht ist - siehe Fig. 4. Mit der Kamera 2 in der Bremsleuchte 1 kann beim rückwärts fahren der durch den Fahrer nicht unmittelbare Bereicht hinter dem LKW 18 überwacht werden. Aus diesem Grund ist die Kamera 2 standardmäßig nach unten ausgerichtet und auch unterhalb des Leuchtelements 6 angeordnet. Auf diese Weise kann der Bereich direkt hinter dem Lastkraftwagen mittels einer geeigneten Brennweite vollständig überwacht werden, ohne dass das Licht des Leuchtelements 1 die von der Kamera erzielte Bildqualität beeinträchtigen könnte.

Wie aus Fig. 3 zu ersehen ist, ist das Objektiv 14 mit einer konvexen Abdeckung 20 versehen. Durch die konvexe Form der Abdeckung 20 im Zusammenwirken mit der Schwerkraft können sich Kalk- und Schmutzrückstände lediglich um den tiefsten Punkt der Abdeckung 20 als kleiner Fleck ablagern, und so die Bildqualität nur vernachlässigbar beeinträchtigt wird.

In einer weiteren Ausführungsform der Erfindung kann die Ausrichtung der Kamera mittels Aktuatoren (nicht dargestellt) während des Betriebs verändert werden. Ferner ist auch ein Verstellbarkeit von Hand vorteilhaft, um die Kamera in eine für den Betrieb sinnvolle Ausgangsposition zu bringen.

## Patentansprüche

1. Leuchte, insbesondere Bremsleuchte (1), mit einem Gehäuse (4), in dem wenigstens ein Leuchtelement (1) und eine Kamera (2) integriert ist, wobei die Kamera (2) wenigstens einen Teil des Halbraumes erfaßt aus dem das wenigstens eine Leuchtelement (6) sichtbar ist, **gekennzeichnet durch**
ein Abschirmmittel, um zu verhindern, dass Licht des Leuchtelements (6) auf die Kamera (2) einfällt.

2. Leuchte nach Anspruch 1, **dadurch gekennzeichnet, dass** die Kamera (2) selbst das Abschirmmittel ist.

3. Leuchte nach Anspruch 2, **dadurch gekennzeichnet, dass** die Kamera (2) gegenüber dem Leuchtelement (6) nach vorne versetzt ist.

4. Leuchte nach einem der Ansprüche 2 bis 3, **dadurch gekennzeichnet, dass** die Aufnahmerichtung (12) der Kamera (2) mit der Hauptstrahlrichtung (8) des Leuchtelements (6) einen Winkel (α) größer null, vorzugsweise einen Winkel (α) zwischen 10° und 90° einschließt.

5. Leuchte nach einem der Ansprüche 1 bis 4, **dadurch gekennzeichnet, dass** das Abschirmmittel eine die Kamera (2) und/oder das Leuchtmittel (6) umgebende Manschette (16) umfaßt.

6. Leuchte nach einem der vorherigen Ansprüche, **dadurch gekennzeichnet, dass** die Kamera (2) schwenkbar und/oder verschiebbar ausgestaltet ist.

7. Leuchte nach Anspruch 6, **dadurch gekennzeichnet, dass** die Kamera (2) mittels einer Kugelgelenkhalterung (10) schwenkbar gelagert ist.

8. Leuchte nach einem der vorherigen Ansprüche, **dadurch gekennzeichnet, dass** die Kamera (2) unter oder neben dem Leuchtelement (6) angeordnet ist.

9. Leuchte nach einem der Ansprüche 1 bis 7, **dadurch gekennzeichnet, dass** die Kamera von dem Leuchtelement umgeben ist.

10. Leuchte nach einem der vorherigen Ansprüche, **dadurch gekennzeichnet, dass** das Gehäuse (4) zumindest in einem Bereich konvex geformt ist, in dem die Kamera (2) durch das Gehäuse (4) Aufnahmen macht.

11. Leuchte nach einem der vorherigen Ansprüche, **dadurch gekennzeichnet, dass** die Kamera (2) eine konvex geformte Abdeckung (20) aufweist.
